# EUROPÄISCHE PATENTSCHRIFT

(11) **EP 4 219 999 B1**
(45) Veröffentlichungstag und Bekanntmachung des Hinweises auf die Patenterteilung: **20.11.2024**
(21) Anmeldenummer: 22154410.9
(22) Anmeldetag: 01.02.2022
(51) Int. Cl.: F16L 37/248

(54) **FLUIDKUPPLUNG**
FLUID COUPLING
RACCORD À FLUID

(43) Veröffentlichungstag der Anmeldung: 02.08.2023
(73) Patentinhaber: Georg Fischer Rohrleitungssysteme AG, 8201 Schaffhausen (CH)
(72) Erfinder: Frauenfelder, Andri, 8247 Flurlingen (CH); Reiz, Robert, 79780 Stühlingen (DE)
(74) Vertreter: Fenner, Seraina

(56) Entgegenhaltungen:
- EP-A1- 0 122 987
- WO-A1-2010/125442
- US-A- 4 438 779
- US-A- 5 099 883

## Beschreibung

Die Erfindung betrifft eine Fluidkupplung beinhaltend zwei miteinander über Verbindungselemente koppelbare Kupplungshälften, wobei jede der Kupplungshälften beinhaltet ein Gehäuse, das eine Stirnseite aufweist, wobei die Stirnseite Verbindungselemente eines Bajonettverschlusses zur gegenseitigen Verbindung der Kupplungshälften aufweist, wobei das Gehäuse eine stirnseitige Verbindungsfläche aufweist, wobei sich die Verbindungsflächen der beiden Kupplungshälften im gekoppelten Zustand gegenseitig kontaktieren, ein kugelförmiges Ventilelement, ein gegenseitig über die Verbindungsflächen betätigbares, Drehhebel freigebendes Verriegelungselement und einen Drehhebel zur Betätigung des Ventilelements.

Fluidkupplungen sorgen für eine abgedichtete Mediumsverbindung zwischen zwei Kupplungshälften, die Schläuche und Rohre miteinander verbinden. Einige Fluidkupplungen enthalten Ventile in den Kupplungshälften, die die Mediumsverbindung selektiv blockieren, um ein Mediumsdurchfluss durch die Kupplung zu verhindern, wenn die Kupplung nicht mit der komplementären Kupplungshälfte in Eingriff steht, um so ein unerwünschtes Austreten des Mediums zu vermeiden.

Solche Fluidkupplungen sind aus der WO2010/125442 A1 bekannt. Sie weisen meist ein Gehäuse auf, in dem ein Ventilelement, meist in Form eines Kugelventils angeordnet ist und selektiv zwischen einer geschlossenen Position, in dem das Ventilelement den Durchgang versperrt, und einer offenen Position, in dem das Ventilelement den Durchgang nicht versperrt, drehbar ist. Um ein ungewolltes Trennen der Fluidkupplung zu unterbinden, weisen solche Fluidkupplungen eine Sperrfunktion auf. Das heisst, wenn die Ventilelemente geöffnet sind, können die beiden Kupplungshälften nicht voneinander getrennt werden. Zudem ist es auch nicht möglich, wenn die Kupplungshälften nicht zur Fluidkupplung miteinander verbunden sind, die Ventilelemente zu öffnen, dann sind sie immer in geschlossener Stellung.

Auch die WO2019/233578 A1 offenbart eine solche Fluidkupplung. Wie auch die EP 0 122 987 A1, US 4,438,779 und die US 5,099,883 alternative Ausführungsformen von Fluidkipplungen zeigen.

Die oben aufgeführten Fluidkupplungen weisen eine hohe Komplexität mit vielen Einzelteilen für separate Sicherheitsmechanismen auf und sind daher in ihrer Herstellung und vor allem ihrer Montage zeit- und kostenintensiv.

Es ist Aufgabe der Erfindung eine Fluidkupplung vorzuschlagen, die einfach und kostengünstig im Aufbau und der Herstellung ist und dennoch alle Sicherheitskriterien einer Fluidkupplung erfüllt.

Diese Aufgabe wird erfindungsgemäss dadurch gelöst, dass eine im Verriegelungselement angeordnete Nut den Drehhebel zum Drehen frei gibt oder sperrt, wobei der Drehhebel einen Verriegelungsbund aufweist, wobei der Verriegelungsbund mit der Nut des Verriegelungselements korrespondiert und entsprechend der Position des Verriegelungselements der Drehhebel drehbar ist oder nicht.

Die erfindungsgemässe Fluidkupplung für flüssige und gasförmige Medien beinhaltet zwei miteinander über Verbindungselemente koppelbare Kupplungshälften. Jede der Kupplungshälften beinhaltet ein Gehäuse, das eine Stirnseite aufweist, wobei die Stirnseite Verbindungselemente eines Bajonettverschlusses zur gegenseitigen Verbindung der Kupplungshälften aufweist. Durch den Bajonettverschluss sind die beiden Kupplungshälften durch ein einfaches Einkoppeln und gegenseitiges Verdrehen zueinander mediumsdicht verbunden. Das Gehäuse weist eine stirnseitige Verbindungsfläche auf, wobei sich die Verbindungsflächen der beiden Kupplungshälften im gekoppelten Zustand gegenseitig kontaktieren. Im Gehäuse ist ein drehbares, kugelförmiges Ventilelement angeordnet, das über den Drehhebel in eine offene oder geschlossenen Stellung rotierbar bzw. drehbar ist. Zur Verriegelung oder Freigabe des Ventilelements ist ein betätigbares Verriegelungselement in der Kupplungshälfte angeordnet, das gegenseitig über die Verbindungsfläche der korrespondierenden Kupplungshälfte betätigbar ist. Die Kupplungshälfte weist ebenso einen Drehhebel zur Betätigung des Ventilelements auf. Eine im Verriegelungselement angeordnete Nut gibt den Drehhebel zum Drehen frei oder nicht. Der Drehhebel ist also nur drehbar wenn das Verriegelungselement in das Gehäuse gedrückt wird, wodurch die Nut im Verriegelungselement zurückversetzt wird und dadurch der Drehhebel freigegeben wird.

Erfindungsgemäß weist der Drehhebel einen Verriegelungsbund auf, wobei der Verriegelungsbund mit der Nut des Verriegelungselements korrespondiert und entsprechend der Position des Verriegelungselements drehbar ist oder nicht. Ist das Verriegelungselement mit Hilfe der Verbindungsfläche der gegenüberliegenden Kupplungshälfte zurückgedrückt, verschiebt sich das Verriegelungselement und somit auch die Nut zurück in das Gehäuse und der Verriegelungsbund am Drehhebel kann durch die Nut hindurch gedreht werden. Vorzugsweise kann der Drehhebel und somit das Ventilelement nur ca. 90° gedreht werden. Als vorteilhafte Ausführungsform hat sich gezeigt, wenn zur Begrenzung der Drehbewegung, von vorzugsweise 90° des Drehhebels, der Drehhebel am Gehäuse oder am Verbindungselement ansteht. Als bevorzugte Ausführung hat sich gezeigt, wenn der Verrieglungsbund des Drehhebels in einer konzentrischen Nut im Gehäuse angeordnet ist und dadurch auch die Begrenzung der Drehbewegung umgesetzt wird indem das Ende der Nut als Anschlag für den Verrieglungsbund bei geöffneter Ventilstellung dient. Vorzugsweise verläuft die Nut im Verriegelungselement konzentrisch zum Drehpunkt des Drehhebels.

Vorzugsweise ist das Verriegelungselement als Verriegelungszapfen ausgebildet. Der Verriegelungszapfen ist parallel zur Strömungsrichtung des Mediums verschiebbar im Gehäuse angeordnet. Als vorteilhaft hat sich gezeigt, wenn der Verriegelungszapfen formschlüssig im Gehäuse geführt ist und nicht um sich selbst rotierbar ist bzw. keine runde Grundfläche aufweist, um zu gewährleisten, dass der Verriegelungsbund des Drehhebels mit der Nut korrespondiert.

Als bevorzugte Ausführungsform hat sich gezeigt, wenn das Verriegelungselement mittels eines Vorspannelements in unbetätigter Stellung vorgespannt ist. Dadurch ragt das Verriegelungselement über die Verbindungsfläche hinaus und ermöglicht beim Verbinden der beiden Kupplungshälften das kontrollierte und positionsgenaue Zurückschieben des Verriegelungselements in das Gehäuse. Zudem gewährleistet das Vorspannelement auch, dass bei keinem Gegendruck auf das Verriegelungselement die Nut in einer Position gehalten wird, in der der Verriegelungsbund des Drehhebels nicht durch die Nut hindurchgedreht werden kann sondern über den Drehanschlag begrenzt wird und dadurch der Drehhebel nicht betätigbar ist und das Ventilelement nicht geöffnet werden kann. Aufgrund des Vorspannelements ist das Verriegelungselement konstant leicht vorgespannt, was eine genaue Positionierung gewährleistet.

Vorzugsweise sind die beiden Kupplungshälften identisch ausgebildet. Dies reduziert die Herstellkosten sowie vereinfacht es die Logistik. Das Gehäuse, der Drehhebel sowie auch die anderen Teile sind so aufgebaut, dass wenn sie sich gegenüber angeordnet sind ineinandergreifen bzw. korrespondieren.

Als bevorzugte Ausführungsform hat sich gezeigt, wenn der Drehhebel eine Sicherungsnase aufweist, wobei die Sicherungsnase das Trennen der beiden Kupplungshälften in geöffneter Ventilelementstellung unterbindet. Die Sicherungsnase ist an den Drehhebel angeformt. Bei einer geöffneten Fluidkupplung, bei der das Medium durch die Kupplung hindurchströmt dürfen die Kupplungshälften nicht voneinander trennbar sein. Der Bajonettverschluss darf dann also nicht lösbar sein. Hierzu steht die Sicherungsnase des Drehhebels beim Versuch des Öffnens des Bajonettverschlusses am Gehäuse oder am Verbindungselement an. Der Bajonettverschluss kann nur gelöst werden, wenn die beiden Drehhebel in die geschlossene Ventilelementstellung zurückgedreht werden. Die Fluidkupplung ist bereits mit einem Drehhebel in Offenstellung vor dem Lösen gesichert.

Als vorteilhaft hat sich auch gezeigt, wenn der Drehhebel eine Rastfunktion aufweist und in geöffnetem Zustand eingerastet ist. Dadurch kann vermieden werden, dass sich der Drehhebel ungewollt beispielsweisen durch Vibrationen löst bzw. in die geschlossene oder eine Zwischenstellung dreht.

Gemäss einer bevorzugten Ausführungsform hat sich gezeigt, wenn die Sicherungsnase des Drehhebels bei gekoppelten und geöffneten Kupplungshälften durch das Verbindungselement der anderen Kupplungshälfte arretiert ist. Dies ermöglicht eine derart gute Arretierung, dass die Kupplung in sich kein Spiel aufweist und die Kupplungshälften zueinander starr angeordnet sind.

Vorzugsweise weist die Nut im Verriegelungselement einen rotationsbegrenzenden Drehanschlag auf, welcher der Begrenzung des Drehhebels in geschlossener Stellung dient. Da es bei Ventilelementen, die eine Kugelform aufweisen, meist sinnvoll ist, dass das Ventilelement ausschliesslich um 90° betätigt wird, damit die Bohrung im Kugelelement so ausgerichtet ist, dass die Strömung geradeaus durch das Ventilelement strömen kann oder komplett geschlossen ist, weist die Nut im Verrieglungselement einen Anschlag auf, der den Drehhebel in geschlossenen Stellung arretiert. Wie bereits oben erwähnt, weist das Gehäuse vorzugsweise eine konzentrisch um den Drehpunkt angeordnete Nut auf, in der der Verrieglungsbund des Drehhebels angeordnet ist. Das Ende der Nut dient als Drehbegrenzung in geöffneter Ventilstellung. Zudem wird auch die Kraft bei einem versuchten Öffnen des Bajonettverschlusses bei geöffneter Fluidkupplung darauf abgeleitet. Das heisst, wenn bei geöffneter Fluidkupplung versehentlich versucht wird die Kupplungshälften zu trennen, steht die Sicherungsnase am Verbindungselement der gegenüberliegenden Kupplungshälfte an. Die Kraft, die nun auf den Drehhebel wirkt, wird vom Ende der Nut im Gehäuse an dem der Verrieglungsbund ansteht aufgenommen.

Eine bevorzugte Ausführungsform besteht darin, dass die Kupplungshälften aus Kunststoff sind. Vorzugsweise ist das Gehäuse, das Ventilelement, das Verriegelungselement und/oder der Drehhebel aus Kunststoff. Selbstverständlich können alle Teile aus Kunststoff sein oder auch nur eines oder ein paar davon, dies ist meist abhängig vom durchströmenden Medium sowie den Anforderungen an die Festigkeit der Kupplung. Es besteht auch die Möglichkeit, dass einige Bauteile aus einem Metall und andere aus einem Kunststoff sind.

Ein Ausführungsbeispiel der Erfindung wird anhand der Figuren beschrieben, wobei sich die Erfindung nicht nur auf das Ausführungsbeispiel beschränkt. Es zeigen:
- Fig. 1: eine Draufsicht einer erfindungsgemässen Fluidkupplung in geöffnetem Zustand,
- Fig. 2: eine Draufsicht der beiden getrennten Kupplungshälften, im geschlossenen Zustand
- Fig. 3: eine dreidimensionale Ansicht der beiden getrennten Kupplungshälften
- Fig. 4: eine dreidimensionale Ansicht einer Kupplungshälfte in geschlossenem Zustand,
- Fig. 5: eine dreidimensionale Ansicht einer Kupplungshälfte in geöffnetem Zustand,
- Fig. 6: eine Schnittansicht einer Kupplungshälfte in geschlossenem Zustand,
- Fig. 7: ein dreidimensionaler Ausschnitt vom Drehhebel ohne Gehäuse in geschlossenem Zustand und
- Fig. 8: eine dreidimensionale Ansicht ohne Gehäuse in geöffnetem Zustand.

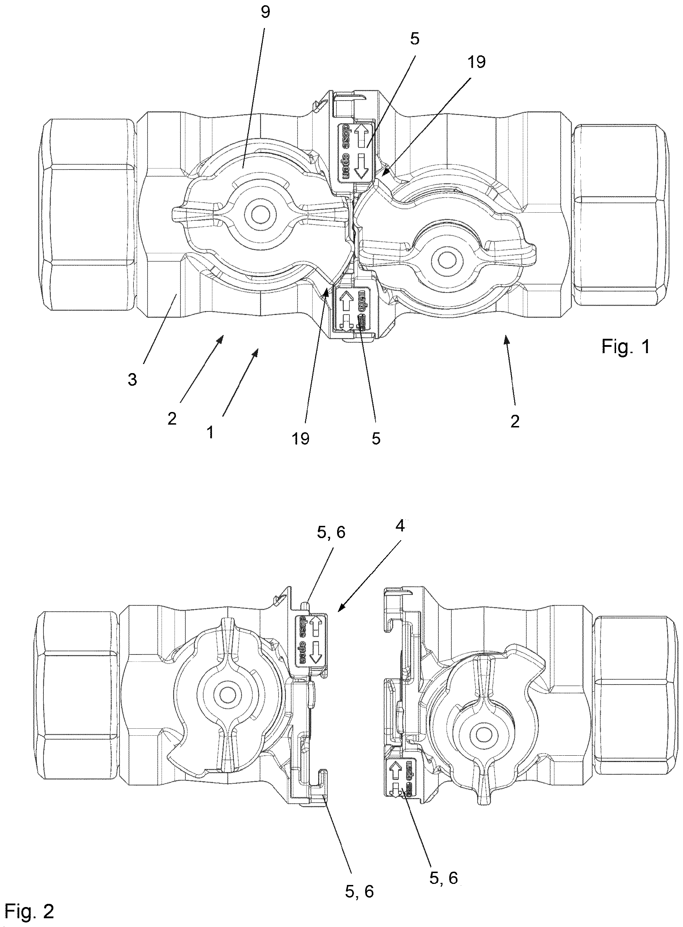

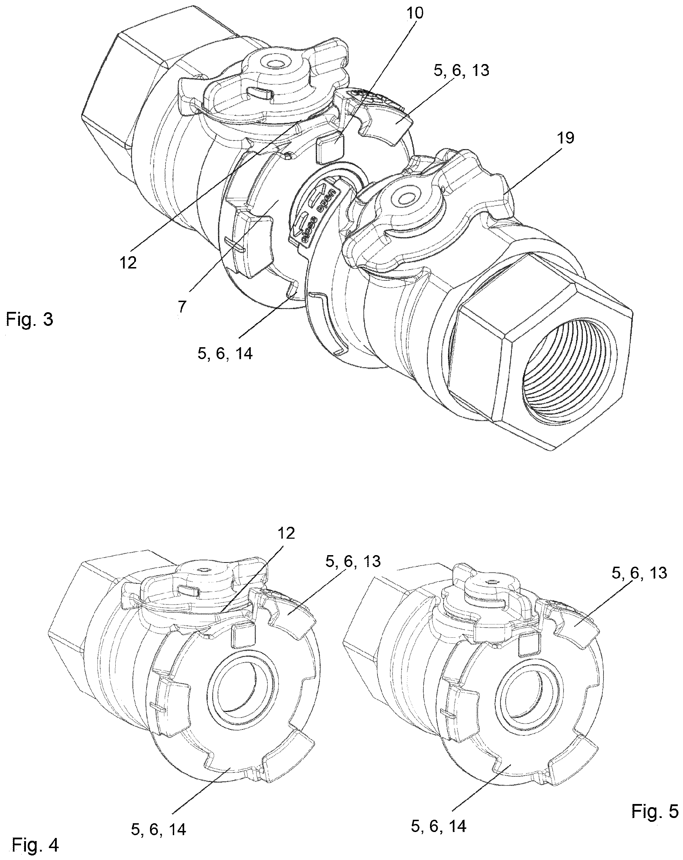

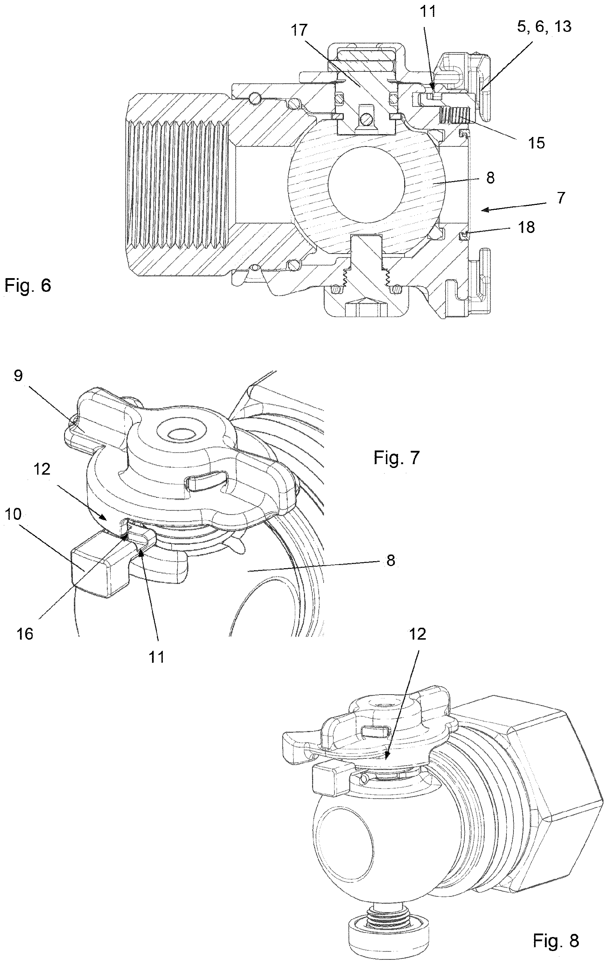

Die in Fig. 1 dargestellte Zeichnung zeigt eine Draufsicht einer erfindungsgemässen Fluidkupplung 1 in montiertem Zustand. Die erfindungsgemässe Fluidkupplung 1 weist zwei Kupplungshälften 2 auf, wobei diese vorzugsweise identisch ausgebildet sind. Als vorteilhaft hat sich auch gezeigt, wenn die beiden Kupplungshälften 2 derart ausgebildet sind, dass ihre Bauteile, wenn sie sich gegenüber angeordnet sind, ineinandergreifen bzw. korrespondieren. Die beiden Kupplungshälften 2 weisen ein Gehäuse 3 auf, das an der Stirnseite 4 Verbindungselemente 5 eines Bajonettverschlusses 6 aufweisen. Dadurch können die beiden Kupplungshälften 2 ineinander gedreht werden. Die Verbindungselemente 5 sind vorzugsweise als Aufnahmelaschen 13 und Eindrehlaschen 14 ausgebildet und greifen beim Zusammendrehen formschlüssig ineinander. In den Figuren 4 und 5 sind die Verbindungselemente 5, welche als Aufnahmelaschen 13 und Eindrehlaschen 14 ausgebildet sind gut ersichtlich. Die stirnseitigen Verbindungsflächen 7 der Gehäuse 3 der beiden Kupplungshälften 2 werden dann aneinandergepresst, vorzugsweise werden die beiden Gehäuse 3 dann noch mit einer Dichtung 18 dazwischen abgedichtet. Die Kupplungshälfte 2 weist ein kugelförmiges Ventilelement 8 auf, dieses ist gut in Fig. 8 ersichtlich. Die Fluidkupplung 1 ist aufgrund der Stellung des Ventilelements 8 bzw. der beiden Ventilelemente 8 in den beiden Kupplungshälften 2 geöffnet oder geschlossen. Das Ventilelement 8 wird über den Drehhebel 9 bedient bzw. gedreht. In der Regel ist ausschliesslich eine 90° Drehung möglich. Dies wird vorzugsweise dadurch gelöst, dass der Verrieglungsbund 12 des Drehhebels 9 in einer Nut im Gehäuse 3 angeordnet ist und das Ende der Nut einen Drehanschlag für den Verrieglungsbund 12 bildet. Dass der Verrieglungsbund 12 in einer Nut im Gehäuse 3 angeordnet ist, kann aus den Fig. 3 und 4 erkannt werden, jedoch ist das Ende der Nut und der dadurch gebildete Anschlag nicht ersichtlich. Der Drehhebel 9 ist mittels einer Achse 17 mit dem Ventilkörper verbunden, was gut aus der Figur 6 zu entnehmen ist. Bei einer solchen Fluidkupplung 1 ist es massgebend, dass einerseits das Ventilelement 8 nur geöffnet werden kann, wenn die Fluidkupplung 1 bzw. die beiden Kupplungshälften 2 miteinander montiert sind bzw. wenn sie nicht zusammengekoppelt sind, dass die einzelnen Kupplungshälften 2 immer geschlossen sind. Und andererseits ist es für eine solche Fluidkupplung 1 auch entscheidend, dass sie in montiertem und geöffneten Zustand nicht gelöst werden kann, das heisst, die Verbindungselemente 5 der beiden Gehäuse 3 nicht voneinander getrennt werden können.

Damit das Ventilelement 8 in die geöffnete Stellung gedreht werden kann, wird das Verriegelungselement 10, welches mit einem Vorspannelement 15 vorzugsweise einer Druckfeder vorgespannt ist, beim Verbinden der beiden Kupplungshälften 2 mit der Verbindungsfläche 7 der gegenüberliegenden Kupplungshälfte 2 zurück in das Gehäuse 3 gestossen. Im Verriegelungselement 10 ist eine Nut 11 angeordnete, die sich dadurch ebenfalls zurückverschiebt. Wo bisher das Verriegelungselement 10 den Drehhebel 9 blockiert hat, liegt dann die Nut 11 vor, wodurch sich der Drehhebel 9 drehen lässt da dieser nicht mehr vom Verriegelungselement 10 blockiert wird. Dies ist gut in der Fig. 7 ersichtlich, wobei die Fig. 7 den Drehhebel 9 noch in geschlossener Stellung und ausgefahrenem Verriegelungselement 10 zeigt. Wird nun das Verriegelungselement 10 nach innen gedrückt, verschiebt sich dieses nach hinten sowie die Nut 11 und der Drehhebel 9, der bisher am Drehanschlag 16 des Verriegelungselements 10 anstand, kann nun durch die Nut 11 hindurchgedreht werden, wie in Fig. 8 ersichtlich, wo die 90° Drehung vollendet ist und das Ventilelement offen ist. In der aufgezeigten Ausführung weist die Nut 11 zwei Bereiche auf. Dadurch ist gewährleistet, dass der Verriegelungsbund 12 des Drehhebels 9 konstant im Verriegelungselement 10 geführt ist, das Risiko des Verklemmens zwischen den Bauteilen wird dadurch reduziert. Jedoch wäre auch eine Lösung denkbar bei dem die Nut 11 konstant dieselbe Breite aufweist und der Drehhebel 9 erst bei der Drehung in Eingriff mit dem Verriegelungselement 10 kommt. Das Verriegelungselement 10 weist vorzugsweise eine rechteckige Grundfläche auf. Zudem wird es über ein Vorspannelement 15, das vorzugsweise als Druckfeder ausgebildet ist hervorgedrückt und wird dann über die gegenüberliegende Verbindungsfläche zurückgepresst, was das Verbindungselement genau positionieren lässt. Die Nut 11 verläuft vorzugsweise konzentrisch zum Drehpunkt des Drehhebels 9 oder auch zum Drehpunkt des Ventilelements.

Um zu gewährleisten, dass die Fluidkupplung 1 bzw. die beiden Kupplungshälften 2 in geöffnetem Zustand wie in Fig. 1 dargestellt nicht voneinander getrennt werden können, weist der Drehhebel 9 eine Sicherungsnase 19 auf. Diese ist am Drehhebel 9 angeformt und bildet einen Anschlag gegen das Losdrehen der beiden Kupplungshälften 2. Wie in Fig. 1 ersichtlich, würde nun jemand die beiden Kupplungshälften 2 in die Richtung des Pfeiles "open" drehen, würden die Sicherungsnasen 19 durch die Verbindungselement 5 blockiert werden, so dass keine gegenseitige Rotation der beiden Kupplungshälften 2 möglich ist.

### Bezugszeichenliste

- 1: Fluidkupplung
- 2: Kupplungshälfte
- 3: Gehäuse
- 4: Stirnseite
- 5: Verbindungselement
- 6: Bajonettverschluss
- 7: Verbindungsfläche
- 8: Ventilelement
- 9: Drehhebel
- 10: Verriegelungselement
- 11: Nut
- 12: Verriegelungsbund
- 13: Aufnahmelasche
- 14: Eindrehlasche
- 15: Vorspannelement / Feder
- 16: Drehanschlag
- 17: Achse
- 18: Dichtung
- 19: Sicherungsnase

## Patentansprüche

1. Fluidkupplung (1) beinhaltend zwei miteinander über Verbindungselemente (5) koppelbare Kupplungshälften (2), wobei jede der Kupplungshälften (2) beinhaltet ein Gehäuse (3), das eine Stirnseite (4) aufweist, wobei die Stirnseite (4) Verbindungselemente (5) eines Bajonettverschlusses (6) zur gegenseitigen Verbindung der Kupplungshälften (2) aufweist, wobei das Gehäuse (3) eine stirnseitige Verbindungsfläche (7) aufweist, wobei sich die Verbindungsflächen (7) der beiden Kupplungshälften (2) im gekoppelten Zustand gegenseitig kontaktieren, ein kugelförmiges Ventilelement (8), ein gegenseitig über die Verbindungsflächen (7) betätigbares, Drehhebel freigebendes Verriegelungselement (10) und einen Drehhebel (9) zur Betätigung des Ventilelements (8), **dadurch gekennzeichnet, dass** eine im Verriegelungselement (10) angeordnete Nut (11) den Drehhebel (9) zum Drehen frei gibt, wobei der Drehhebel (9) einen Verriegelungsbund (12) aufweist, wobei der Verriegelungsbund (12) mit der Nut (11) des Verriegelungselements (10) korrespondiert und entsprechend der Position des Verriegelungselements (10) der Drehhebel (9) drehbar ist oder nicht.

2. Fluidkupplung (1) nach Anspruch 1, **dadurch gekennzeichnet, dass** das Verriegelungselement (10) als Verriegelungszapfen ausgebildet ist.

3. Fluidkupplung (1) nach einem der Ansprüche 1 oder 2, **dadurch gekennzeichnet, dass** das Verriegelungselement (10) mittels eines Vorspannelements (15) in unbetätigter Stellung vorgespannt ist.

4. Fluidkupplung (1) nach einem der Ansprüche 1 bis 3, **dadurch gekennzeichnet, dass** die beiden Kupplungshälften (2) identisch ausgebildet sind.

5. Fluidkupplung (1) nach einem der Ansprüche 1 bis 4, **dadurch gekennzeichnet, dass** der Drehhebel (9) eine Sicherungsnase (19) aufweist, wobei die Sicherungsnase (19) das Trennen der beiden Kupplungshälften (2) in geöffneter Ventilelementstellung unterbindet.

6. Fluidkupplung (1) nach einem der Ansprüche 1 bis 5, **dadurch gekennzeichnet, dass** die Sicherungsnase (19) des Drehhebels (9) bei gekoppelten und geöffneten Kupplungshälften (2) durch das Verbindungselement (5) der anderen Kupplungshälfte (2) arretiert ist.

7. Fluidkupplung (1) nach einem der Ansprüche 1 bis 6, **dadurch gekennzeichnet, dass** die Nut (11) im Verriegelungselement (10) einen für den Drehhebel (9) rotationsbegrenzenden Drehanschlag (16) aufweist.

8. Fluidkupplung (1) nach einem der Ansprüche 1 bis 7, **dadurch gekennzeichnet, dass** die Kupplungshälften (2) aus Kunststoff sind, vorzugsweise das Gehäuse (3), das Ventilelement (8), Verriegelungselement (10) und/oder der Drehhebel (9).

## Claims

1. Fluid coupling (1) containing two coupling halves (2) which can be coupled to each other by means of connection elements (5), wherein each of the coupling halves (2) contains a housing (3) which has an end face (4), wherein the end face (4) has connection elements (5) of a bayonet closure (6) for mutual connection of the coupling halves (2), wherein the housing (3) has an end connection face (7), wherein the connection faces (7) of the two coupling halves (2) contact each other in the coupled state, a spherical valve element (8), a locking element (10) which releases a rotary lever and which can be mutually activated by means of the connection faces (7) and a rotary lever (9) for activating the valve element (8), **characterized in that** a groove (11) which is arranged in the locking element (10) releases the rotary lever (9) for rotation, wherein the rotary lever (9) has a locking collar (12), wherein the locking collar (12) corresponds to the groove (11) of the locking element (10) and the rotary lever (9) is rotatable or not in accordance with the position of the locking element (10).

2. Fluid coupling (1) according to Claim 1, **characterized in that** the locking element (10) is in the form of a locking pin.

3. Fluid coupling (1) according to either Claim 1 or 2, **characterized in that** the locking element (10) is pretensioned by means of a pretensioning element (15) in the non-activated position.

4. Fluid coupling (1) according to any one of Claims 1 to 3, **characterized in that** the two coupling halves (2) are configured in an identical manner.

5. Fluid coupling (1) according to any one of Claims 1 to 4, **characterized in that** the rotary lever (9) has a securing projection (19), wherein the securing projection (19) prevents the separation of the two coupling halves (2) in the open valve element position.

6. Fluid coupling (1) according to any one of Claims 1 to 5, **characterized in that** the securing projection (19) of the rotary lever (9) when the coupling halves (2) are coupled and opened (2) is locked by the connection element (5) of the other coupling half (2).

7. Fluid coupling (1) according to any one of Claims 1 to 6, **characterized in that** the groove (11) in the locking element (10) has a rotary stop (16) which limits rotation for the rotary lever (9).

8. Fluid coupling (1) according to any one of Claims 1 to 7, **characterized in that** the coupling halves (2) are made of plastics material, preferably the housing (3), the valve element (9), locking element (10) and/or the rotary lever (9).

## Revendications

1. Accouplement fluidique (1) contenant deux moitiés d'accouplement (2) qui peuvent être accouplées l'une à l'autre par le biais d'éléments de liaison (5), chacune des moitiés d'accouplement (2) contenant un boîtier (3) qui comporte une face frontale (4), la face frontale (4) comportant des éléments de liaison (5) d'un verrou à baïonnette (6) afin de relier les moitiés d'accouplement (2) l'une à l'autre, le boîtier (3) comportant une surface de liaison frontale (7), les surfaces de liaison (7) des deux moitiés d'accouplement (2) se touchant à l'état accouplé, un élément formant soupape sphérique (8), un élément de verrouillage (10) qui peut être actionné mutuellement par le biais des surfaces de liaison (7) et qui libère le levier rotatif et un levier rotatif (9) destiné à actionner l'élément formant soupape (8), **caractérisé en ce qu'**une rainure (11) ménagée dans l'élément de verrouillage (10) libère le levier rotatif (9) en vue de la rotation, le levier rotatif (9) comportant une collerette de verrouillage (12), la collerette de verrouillage (12) correspondant à la rainure (11) de l'élément de verrouillage (10) et le levier rotatif (9) pouvant être tourné ou non en fonction de la position de l'élément de verrouillage (10) .

2. Accouplement fluidique (1) selon la revendication 1, **caractérisé en ce que** l'élément de verrouillage (10) est conçu comme une goupille de verrouillage.

3. Accouplement fluidique (1) selon l'une des revendications 1 ou 2, **caractérisé en ce que** l'élément de verrouillage (10) est précontraint en position non actionnée au moyen d'un élément de précontrainte (15).

4. Accouplement fluidique (1) selon l'une des revendications 1 à 3, **caractérisé en ce que** les deux moitiés d'accouplement (2) sont identiques.

5. Accouplement fluidique (1) selon l'une des revendications 1 à 4, **caractérisé en ce que** le levier rotatif (9) comporte un ergot de sécurité (19), l'ergot de sécurité (19) empêchant les deux moitiés d'accouplement (2) de se séparer dans la position ouverte de l'élément formant soupape.

6. Accouplement fluidique (1) selon l'une des revendications 1 à 5, **caractérisé en ce que** l'ergot de sécurité (19) du levier rotatif (9) est bloqué par l'élément de liaison (5) de l'autre moitié d'accouplement (2) lorsque les moitiés d'accouplement (2) sont accouplées et ouvertes.

7. Accouplement fluidique (1) selon l'une des revendications 1 à 6, **caractérisé en ce que** la rainure (11) ménagée dans l'élément de verrouillage (10) comporte une butée de rotation (16) qui limite la rotation du levier rotatif (9).

8. Accouplement fluidique (1) selon l'une des revendications 1 à 7, **caractérisé en ce que** les moitiés d'accouplement (2) sont en matière synthétique, de préférence le boîtier (3), l'élément formant soupape (8), l'élément de verrouillage (10) et/ou le levier rotatif (9).
